# EUROPÄISCHE PATENTSCHRIFT

(11) **EP 0 452 835 B1**
(45) Veröffentlichungstag und Bekanntmachung des Hinweises auf die Patenterteilung: **23.06.1993**
(21) Anmeldenummer: 91105925.1
(22) Anmeldetag: 13.04.1991
(51) Int. Cl.: B60G 21/055, B60G 11/20

(54) **Kraftfahrzeug-Hinterachse**
Rear axle of a motor car
Essieu arrière d'un véhicule automobile

(30) Priorität: 19.04.1990 DE 4012401
(43) Veröffentlichungstag der Anmeldung: 23.10.1991
(73) Patentinhaber: Volkswagen Aktiengesellschaft, 38436 Wolfsburg (DE)
(72) Erfinder: Fochler, Hartmut, Dipl.-Ing., W-3306 Lehre (DE)

(56) Entgegenhaltungen:
- EP-A- 0 059 126
- DE-A- 3 521 361
- FR-A- 2 098 846
- FR-A- 2 618 733
- ATZ AUTOMOBILTECHNISCHE ZEITSCHRIFT. Band 85, Nr. 9. September 1983, STUTTGART DE,Seiten 509 - 511; F.W. Lohr: "Neuer Opel Corsa"

## Beschreibung

Die Erfindung bezieht sich auf eine Kraftfahrzeug-Hinterachse des Verbund- bzw. Koppellenkerachstyps mit schwenkbar am Fahrzeugaufbau anlenkbaren radtragenden Längslenkern in Blechschalenbauweise der im Oberbegriff des Patentanspruchs 1 genannten Art.

Aus dünnwandigen Blechschalen zu einem Schalenkörper zusammengefügte, vorzugsweise zusammengeschweißte Längslenker bieten dem Konstrukteur große Gestaltungsmöglichkeiten, weil sie ohne großen Fertigungsaufwand auch in vergleichsweise aufwendiger und komplizierter Formgestaltung hergestellt werden können. Trotz hoher Biege- und Torsionssteifigkeit besitzen sie dabei ein vergleichsweise nur geringes Gewicht.

Obgleich Verbund- bzw. Koppellenkerachsen durch ihre tordierbare Querstrebe eine Stabilisatorwirkung besitzen, ist es zur Erzielung einer optimalen Fahrwerksabstimmung in vielen Fällen erforderlich, zusätzlich einen Stabilisator einzubauen. Als Stabilisatoren werden im allgemeinen quer zur Fahrzeuglängsrichtung liegende Drehstabfedern verwendet, die mit ihren Enden an den Längslenkern der Verbundlenkerachse angreifen.

Üblich sind sowohl Stabilisatoranordnungen mit etwa rechtwinklig zu Hebelarmen abgewinkelten Stabilisatorenden, sogenannte U-Form-Stabilisatoren, als auch Stabilisatoranordnungen mit durchgehend zumindest annähernd geradlinigen, das heißt an den Enden nicht abgewinkelten Drehstäben.

Die Stabilisatorenden von Stabilisatoren des U-Form-Typs werden i.a. unter Verwendung je zweier beabstandeter Gummielemente an den Längslenkern - meistens von unten - angeschraubt, wozu deren Wandstärke zumindest in diesen Bereichen ausreichend dick bemessen sein muß. Stabilisatoranordnungen dieses Typs besitzen an sich den Vorteil, daß die für einen bestimmten Fahrzeugtyp wegen der heute üblichen vielfältigen Ausstattungsvarianten, insbesondere bezüglich der Motorisierung, benötigten Verbundlenkerachsen mit unterschiedlichen Stabilisatoren grundsätzlich unter Verwendung identischer Achs-Schweißkörper (zusammengeschweißter Längslenker/Querstreben-Verbund) hergestellt werden können, an die dann jeweils nur unterschiedlich bemessene U-Formstabilisatoren angeschraubt werden. Nachteilig ist dagegen, daß diese Art der Anbindung der Stabilisatorenden wegen der vierfachen Gummilagerung nicht nur relativ kostenintensiv ist, sondern auch vergleichsweise viel Montagezeit benötigt wird. Darüber hinaus wird für die auf oder unter die Längslenker geschraubten Stabilisatorenden zusätzlicher Bauraum benötigt, der bei von unten angeschraubten Stabilisatoren u.U. zu einer Verringerung der Bodenfreiheit führt. Im übrigen sind U-Form-Stabilisatoren vergleichsweise materialaufwendig und schwer.

Die Stabilisatorenden von Stabilisatoren des geradlinigen Typs gemäß dem Oberbegriffs des Anspruchs 1 werden dagegen üblicherweise unmittelbar in die Blechwände der Längslenker eingeschweißt oder eingeklemmt (siehe z.B. ATZ Automobiltechnische Zeitschrift, vol.85, no.9, September 1983, Stuttgart, Seite 510, Bild 21).. Es ist leicht einsehbar, daß die dünnwandigen Längslenker hierbei im Bereich der eingeschweißten bzw. eingeklemmten Stabilisatorenden hoch beansprucht werden und daß diese Beanspruchung mit der Größe des benötigten Stabilisators, das heißt mit der Größe des Stabilisator-Torsionsmomentes bzw. mit der Größe der in die Längslenker eingeleiteten Stabilisatorkräfte zunimmt.

Zunehmende Motorisierung und größer werdende Zuladungsmöglichkeiten der Fahrzeuge erfordern für eine optimale Fahrwerksabstimmung den Einsatz immer größer bemessener Stabilisatoren mit entsprechend größeren Stabilisatorkräften. Vielfach kann dabei bereits die Belastbarkeitsgrenze der Stabilisatoranbindung erreicht werden, insbesondere dann, wenn Drehstäbe mit kreiszylindrischen Stabilisatorköpfen eingesetzt werden. In diesen Fällen können Stabilisatoranordnungen mit direkt eingeschweißten bzw. eingeklemmten Stabilisatorenden nur noch dadurch realisiert werden, daß die Blechstärke der schalenförmigen Längslenker über das für die betriebsmäßig auftretenden maximalen Radlasten an sich nur benötigte Maß hinaus vergrößert wird, was jedoch teuer ist und dem allgemeinen Ziel der Leichtbauweise zuwider läuft.

Der Erfindung liegt nun die Aufgabe zugrunde, eine Kraftfahrzeughinterachse des Verbund- bzw. Koppellenkerachstyps der im Oberbegriff des Patentanspruchs 1 genannten Art so auszubilden, daß einerseits der Einsatz von - im Vergleich zu U-Form-Stabilisatoren leichten - als geradlinige Drehstäbe ausgebildeten großdimensionierten Stabilisatoren auch in Verbindung mit gewichtsoptimierten dünnwandigen Lenkerblechschalen möglich ist, und daß andererseits der fertigungs- und steuerungstechnische Aufwand zur Herstellung von sich im wesentlichen lediglich durch die Größe des eingebauten Stabilisators voneinander unterscheidenden Verbundlenkerachsen gering gehalten oder sogar verringert wird.

Diese Aufgabe wird erfindungsgemäß durch die Merkmale des Patentanspruchs 1 gelöst.

Erfindungsgemäß werden die Stabilisatorenden des geradlinigen Stabilisators nicht mehr unmittelbar in die dünnwandigen Blechschalen der Längslenker eingeschweißt, sondern form- oder kraftschlüssig in biegesteife pleuelstangenartige Koppelglieder eingesteckt, welche im aufbauseitigen Endbereich der Längslenker-Schalenkörper einliegen und die Stabilisatorkräfte in die Längslenker einleiten. Auf diese Weise können Verbundlenkerachsen mit vergleichsweise leichten dünnwandigen Blechschalen-Längslenkern in einfacher Weise mit geradlinigen Stabilisatoren beliebigen Durchmessers bestückt werden, ohne daß hierfür eine konstruktive Differenzierung des eigentlichen Achs-Schweißkörpers (Längslenker/Querstreben-Verbund) erforderlich ist; lediglich die im aufbauseitigen Endbereich der Längslenker-Schalenkörper einliegenden biegesteifen Koppelglieder müssen bezüglich ihrer die Stabilisatorenden aufnehmenden Ausnehmungen auf die unterschiedlich bemessenen Stabilisatorenden der verschiedenen Stabilisatortypen abgestimmt sein, sofern die Stabilisatorkräfte - aus welchen Gründen auch immer - nicht identisch ausgebildet sind.

Anhand eines in der Zeichnung dargestellten Ausführungsbeispiels wird die Erfindung nachstehend näher erläutert.

In der Zeichnung zeigen
- Fig. 1: die Seitenansicht einer Kraftfahrzeug-Hinterachse des Verbundlenkerachstyps gemäß der Erfindung,
- Fig. 2: eine Teildraufsicht dieser Hinterachse und
- die Figuren 3 bis 5: verschiedene Schnitte durch den aufbauseitigen Endbereich der Längslenker dieser Hinterachse entsprechend der in Fig. 1 eingetragenen Schnittführung.

Dargestellt sind in der Zeichnung lediglich die für das Verständnis der Erfindung erforderlichen Einzelheiten der erfindungsgemäßen Kraftfahrzeug-Hinterachse. Nicht dargestellt sind u.a. das Hinterrad selbst und der Lagerzapfen zu seiner Lagerung sowie die Feder- und Dämpfungseinrichtung der Hinterachse.

Die dargestellte Verbundlenkerachse 1 besteht in üblicher Weise aus zwei am nicht weiter dargestellten Fahrzeugaufbau schwenkbar anlenkbaren radtragenden Längslenkern 2 in Blechschalenbauweise - von denen nur einer dargestellt ist - und einer die beiden Längslenker in der Nähe ihrer aufbauseitigen Lenkerlager 3 miteinander verbindenden tordierbaren biegesteifen Querstrebe 4.

Die Schalenkörper 7 der Längslenker 2 sind aus einer oberen und einer unteren Blechschale 71, 72 zusammengesetzt, die miteinander sowie mit dem an ihnen angreifenden Ende der Querstrebe 4 verschweißt sind.

Ein mit seinen Enden an den Längslenkern 2 angreifender quer zur Fahrzeuglängsachse verlaufender Stabilisator 5 nach Art eines geradlinigen Drehstabes ist in Höhe der im Ausführungsbeispiel als in Fahrtrichtung offenes V-Profil ausgebildeten Querstrebe 4 angeordnet. Die Anbindung der Stabilisatorenden 6 an die Längslenker 2 erfolgt nicht durch unmittelbares Einschweißen in die Blechschalen, sondern jeweils über ein biegesteifes pleuelstangenartiges Koppelglied 8, das im aufbauseitigen Endbereich des Schalenkörpers 7 des betreffenden Längslenkers 2 eingelegt ist.

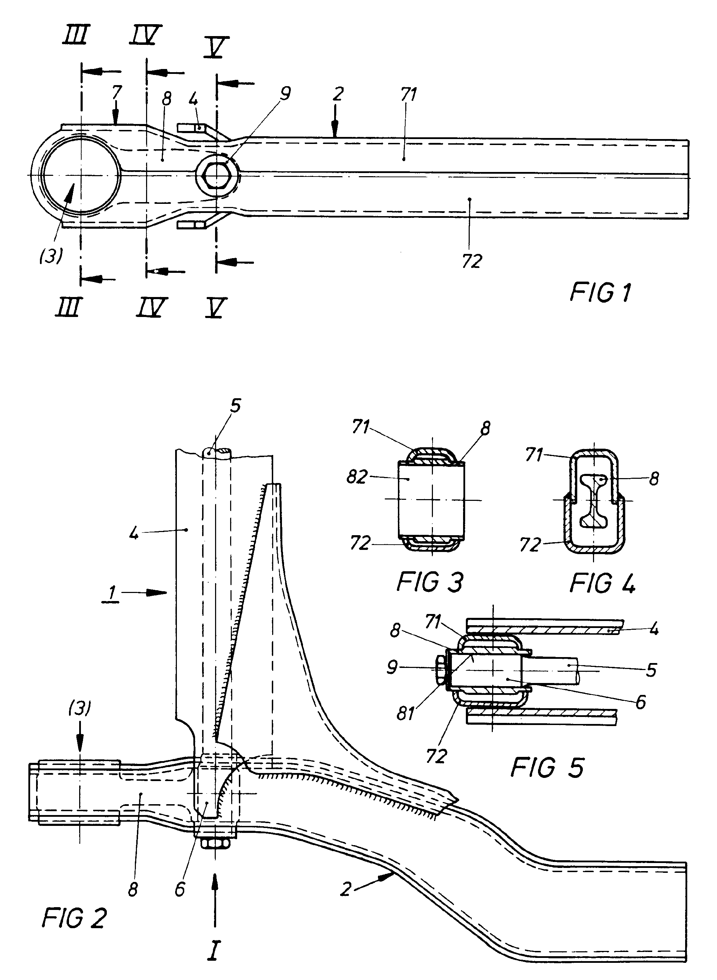

Wie die Figuren 1 und 2 in Verbindung mit den Schnittdarstellungen der Figuren 3 bis 5 erkennen lassen, weist das Koppelglied 8 an seinem etwa in Höhe der Querstrebe 4 liegenden radseitigen Ende eine Ausnehmung 81 und an seinem aufbauseitigen Ende eine im Ausführungsbeispiel kreiszylindrische Ausnehmung 82 auf. In die radseitige Ausnehmung 81 ist der Stabilisator 5 mit seinem Stabilisatorende 6 eingesteckt, wobei die Verbindung zwischen Stabilisatorende 6 und Ausnehmung 81 des Koppelgliedes 8 vorzugsweise formschlüssig erfolgt. Grundsätzlich ist jedoch auch eine kraft- bzw. reibschlüssige Verbindung zwischen diesen beiden Bauelementen denkbar. Die aufbauseitige kreiszylindrische Ausnehmung 82 des Koppelgliedes dient zur Aufnahme des z.B. als Gummimetall-Lager nach Art der DE-PC 28 38 391 ausgebildeten, im einzelnen nicht weiter dargestellten Lenkerlagers 3. Das Lenkerlager wird dabei vorzugsweise in die Ausnehmung eingepreßt.

Das Koppelglied 8 ist zumindest in seinem die aufbauseitige Ausnehmung 82 enthaltenden Endbereich zumindest kraftschlüssig mit dem ihn umgebenden Schalenkörper 7 des Längslenkers verbunden. Wegen der vergleichsweise großen Abstützbasis (Hebelarm des Koppelgliedes 8) für die in das Koppelglied 8 eingeleiteten Torsionsmomente des Stabilisators 5 ergeben sich im Bereich der vorderen Ausnehmung 82 des Koppelgliedes nur relativ kleine Kräfte, welche über den Außenumfang des aufbauseitigen Endes des Koppelgliedes 8 mit nur geringer Flächenpressung in den schalenförmigen Längslenker 2 eingeleitet werden. Hieraus resultiert die Möglichkeit, die Schalenkörper 7 der Längslenker 2 aus vergleichsweise dünnwandigen Blechschalen herzustellen, was zu einer deutlichen Gewichtseinsparung führt.

Die radseitigen Ausnehmungen 81 der Koppelglieder 8 sowie die darin einsteckenden Stabilisatorenden 6 besitzen zur Herstellung eines Formschlusses eine aufeinander abgestimmte, von der Kreisform abweichende Kontur, vorzugsweise eine Vielkantkontur.

Von Vorteil ist es, wenn der Stabilisator 5 - wie in den Figuren 2 und 5 erkennbar - im übrigen eine Querschnittsform besitzt, die es ermöglicht, ihn zwecks Einbau und/oder Ausbau in die Verbundlenkerachse in seiner ganzen Länge durch die radseitige Ausnehmung 81 des Koppelgliedes 8 hindurchzuschieben; das bedeutet letztlich, daß der Durchmesser des im allgemeinen als Rundstab ausgebildeten, auf Torsion beanspruchten Mittelteils des Stabilisators 5 zumindest etwas geringer ist als der Kerndurchmesser der z.B. als Vielkant ausgebildeten Stabilisatorenden 6. Der Stabilisator 5 muß bei einer derartigen Ausbildung natürlich gegen ein ungewolltes axiales Herausgleiten gesichert sein, was im Ausführungsbeispiel durch auf die Stabilisatorenden aufgeschraubte Sicherungsscheiben 9 erfolgt.

Durch die im aufbauseitigen Endbereich der Schalenkörper 7 eingelegten vergleichsweise kurzen biegesteifen Koppelglieder 8, die vorzugsweise aus Guß hergestellt sein können, werden die Stabilisatorkräfte unmittelbar ins eingepreßte Lenkerlager 3 eingeleitet; die dünnwandigen Schalenkörper 7 selbst bleiben davon im wesentlichen unbelastet, so daß die Wandstärke der Blechkörper im wesentlichen ausschließlich unter dem Gesichtspunkt der an den Rädern betriebsmäßig auftretenden maximalen Kräfte bemessen werden kann. Das Einpressen der Lenkerlager 3 in die aufbauseitige Ausnehmung 82 des vorzugsweise als Gußkörper ausgebildeten Kuppelgliedes 8 ist völlig unproblematisch. Im Gegensatz dazu ist das Einpressen solcher Lenkerlager in dünnwandige Blechschalenkörper vergleichsweise schwierig, weil es dabei u.U. zu kleineren Ausbeulungen und Verwerfungen der Blechschale kommen kann.

Obgleich es nicht erforderlich ist, ist es von Vorteil, das Koppelglied mit dem Schalenkörper 7 des Längslenkers im aufbauseitigen Endbereich zu verschweißen, da dadurch das Eindringen von Spritzwasser o.ä. in den Schalenkörper verhindert wird. Normalerweise genügt es jedoch, wenn das Koppelglied 8 bei der Fertigung des Achs-Schweißkörpers in die eine Blechschale, z.B. in die untere Blechschale 72 eingelegt wird, anschließend die obere Blechschale 71 aufgelegt und sodann beide Schalen miteinander verschweißt werden; das Koppelglied wird dabei im Bereich seiner aufbauseitigen Ausnehmung 82 i.a. ausreichend fest zwischen die beiden verschweißten Schalen 71, 72 gespannt (Preßverbindung).

Die erfindungsgemäße Kraftfahrzeug-Hinterachse ermöglicht es, in einfacher Weise an die gleichen in dünnwandiger Blechschalenbauweise gefertigten Längslenker von Verbundlenkerachsen o.ä. die Stabilisatorenden von sehr unterschiedlich bemessenen stabförmigen Stabilisatoren anzubinden, was bei der Herstellung von Serienfahrzeugen, deren Hinterachsen aufgrund entsprechender Ausstattungsvarianten mit unterschiedlichen Stabilisatoren ausgerüstet sein müssen, steuerungstechnisch von großem Vorteil ist, da trotz der Stabilisatorenvielfalt ein einheitlicher Achsschweißkörper (Längslenker/Querstreben-Verbund) Verwendung finden kann.

## Patentansprüche

1. Kraftfahrzeug-Hinterachse (1) des Verbund- bzw. Koppellenkerachstyps mit schwenkbar am Fahrzeugaufbau anlenkbaren radtragenden Längslenkern (2) in Blechschalenbauweise, die in der Nähe ihrer aufbauseitigen Lenkerlager (3) durch eine tordierbare biegesteife Querstrebe (4) miteinander verbunden sind, sowie mit einem mit seinen Enden an den Längslenkern (2) angreifenden, quer zur Fahrzeuglängsachse verlaufenden, als zumindest annähernd geradliniger Drehstab ausgebildeten Stabilisator (5)
dadurch gekennzeichnet, daß die Anbindung der Stabilisatorenden (6) an die Längslenker (2) jeweils über ein im aufbauseitigen Endbereich des Schalenkörpers (7) des betreffenden Längslenkers (2) einliegendes biegesteifes, pleuelstangenartiges Koppelglied (8) erfolgt, dessen radseitiges Ende eine Ausnehmung (81) zur vorzugsweise formschlüssigen Verbindung mit dem dort einsteckenden Stabilisatorende (6) und dessen aufbauseitiges Ende eine vorzugsweise kreiszylindrische Ausnehmung (82) zur Aufnahme - vorzugsweise im Preßsitz - des Lenkerlagers (3) aufweist,
und daß das Koppelglied (8) zumindest in seinem die aufbauseitige Ausnehmung (82) enthaltenden Endbereich zumindest kraftschlüssig mit dem ihn umgebenden Schalenkörper (7) verbunden ist.

2. Kraftfahrzeug-Hinterachse nach Anspruch 1,
dadurch gekennzeichnet, daß die radseitigen Ausnehmungen (81) der Koppelglieder (8) sowie die darin einsteckenden Stabilisatorenden (6) jeweils eine von der Kreisform abweichende, aufeinander abgestimmte Kontur, vorzugsweise eine Vielkantkontur aufweisen,
und daß der Stabilisator (5) im übrigen eine Querschnittsform besitzt, die es ermöglicht, ihn zwecks Einbau und/oder Ausbau in seiner ganzen Länge durch die radseitige Ausnehmung (81) des Koppelgliedes (8) hindurch zu schieben.

## Claims

1. Motor vehicle rear axis (1) of the compound axis type and/or of the coupling connecting rod axis type having wheel-bearing longitudinal connecting rods (2) of a steel plate shell structure which can be coupled pivotably at the vehicle body and which are connected to each other in the proximity of their steering bearing (3) on the body side by means of a transverse strut (4) which is resistant to bending and able to twist as well as having a stabilizer (5) which engages with its ends the longitudinal connecting rods (2) and extends transverse to the vehicle longitudinal axis, the said stabilizer (5) being formed as at least an almost straight torsion bar, characterised in that the ends (6) of the stabilizer are connected to the longitudinal connecting rods (2) in each case by way of a coupling element (8) which is resistant to bending, which is of a connecting rod type and which lies in the end region on the body side of the shell-type body (7) of the relevant longitudinal connecting rod (2) and the end on the wheel side of the said coupling element (8) comprises a recess (81) in order to provide a connection preferably in a form-locking manner to the stabilizer end (6) protruding therein and the end on the body side of the said coupling element (8) comprises a preferably cylindrical recess (82) in order to receive the connecting rod bearing (3), preferably in a press fit, and that the coupling element (8) is connected at least in its end region containing the recess (82) on the body side at least in a positive manner to the shell-type body (7) enveloping the said coupling element (8).

2. Motor vehicle rear axis according to claim 1, characterised in that the recesses (81) on the wheel side of the coupling elements (8) as well as the stabilizer ends (6) which protrude therein comprise in each case a contour which match each other and deviate from a circular shape, the said contour is preferably multi-sided, and that the stabilizer (5) moreover comprises a cross-sectional shape which renders it possible for it to be pushed in its entire length through the recess (81) on the wheel side of the coupling element (8) for the purpose of installation and/or dismantling.

## Revendications

1. Essieu arrière (1) de véhicule à bras oscillants de type composite ou de jonction, comprenant des bras longitudinaux (2) de type en coques de tôle, supportant les roues, articulés de manière oscillante sur le châssis du véhicule et reliés l'un à l'autre à proximité de leur palier (3) situé du côté du châssis par une entretoise (4) résistant à la flexion et pouvant subir une torsion, ledit essieu comprenant par ailleurs un stabilisateur (5) constitué d'une barre au moins approximativement rectiligne de torsion, perpendiculaire à l'axe longitudinal du véhicule et dont les extrémités attaquent les bras oscillants longitudinaux (2), caractérisé en ce que la réunion des extrémités (6) du stabilisateur et de chacun des bras oscillants longitudinaux (2) est assurée par un organe de jonction (8) du type d'une bielle qui résiste à la flexion, qui est placé dans la partie extrême, côté châssis, du corps (7) de la coque du bras oscillant longitudinal correspondant (2), dont l'extrémité côté roue comporte un évidement (81) pour l'assemblage, de préférence par complémentarité de formes, avec l'extrémité (6) du stabilisateur qui y est encastrée et dont l'extrémité côté châssis comporte un évidement (82), de préférence cylindrique à base circulaire, destiné à loger - de préférence à ajustement serré - le palier (3) du bras oscillant et en ce qu'au moins la partie extrême de l'organe de jonction (8) qui comporte l'évidement (82) côté châssis est reliée au moins par serrage au corps (7) de la coque qui l'entoure.

2. Essieu arrière de véhicule automobile selon la revendication 1, caractérisé en ce que les évidements (81) côté roue des organes de jonction (8) ainsi que les extrémités (6) du stabilisateur qui y sont encastrées ont des contours qui se correspondent, qui diffèrent de la forme circulaire, de préférence un contour polygonal, et en ce que le stabilisateur (5) a par ailleurs une forme transversale qui permet de le faire passer sur toute sa longueur par l'évidement (81) côté roue de l'organe de jonction (8) pour son montage et/ou son démontage.
